# EUROPEAN PATENT SPECIFICATION

(11) **EP 2 353 286 B1**
(45) Date of publication and mention of the grant of the patent: **25.09.2013**
(21) Application number: 09771597.3
(22) Date of filing: 30.11.2009
(51) Int. Cl.: H04N 1/387, G06T 11/00

(54) **METHOD FOR PRINTING INKS ON A SUBSTRATE**
VERFAHREN ZUM DRUCKEN VON TINTEN AUF EINEM SUBSTRAT
PROCÉDÉ POUR IMPRIMER DES ENCRES SUR UN SUBSTRAT

(30) Priority: 01.12.2008 NL 1036258
(43) Date of publication of application: 10.08.2011
(73) Proprietor: Trespa International B.V., 6002 SM Weert (NL)
(72) Inventor: VAN DE WALL, Wilhelmus, Josephus, Alex, NL-5591 CS Heeze (NL)
(74) Representative: Algemeen Octrooi- en Merkenbureau
(86) International application number: PCT/NL2009/000237
(87) International publication number: WO 2010/064894

(56) References cited:
- EP-A- 0 558 008
- GB-A- 2 434 431
- US-A- 6 101 293
- US-B1- 6 593 933

## Description

The present invention relates to a method for printing inks on a substrate, as well as to the use of a substrate obtained by using such a method.

A technology commonly used in printing substrates, such as films or resin-impregnated or resin-coated papers, which substrates are used for manufacturing HPLs (High Pressure Laminates), is the rotary printing technology. Using technology of this kind, such as rotary screen printing, the negative of the image to be transferred is placed on the outer circumference of a so-called printing cylinder. The printing cylinder is then brought into contact with the substrate, which substrate usually has a dimension several times larger than the outer circumference of the cylinder. The substrate is passed under or over the pressure cylinder so as to be printed in a continuous process. As a result, a repetitive and thus identical pattern (= positive image) is applied to the substrate. The occurrence of said repetitive pattern is undesirable for certain applications, in particular if a few of such substrates are to be placed side by side on a surface, for example as a facade application, which means that the individual, original substrates will be clearly distinguishable on the surface thus obtained. This is in particular the case at the edges or sides of the substrates, since the substrates abut one another at those locations. Such visually distinguishable transitions between the individual substrates, and even within the substrates, are found to be undesirable and objectionable.

The occurrence of objectionable repetitions is reduced by reducing the contrasts in the print and by removing characteristic elements from the original, for example by retouching. The objectionable repetitive effect can be partially eliminated by decreasing the degree of contrast and by retouching, a drawback being the fact that the original image will lose some of its quality.

In many cases the substrates are much larger than the original image that is available. In order to be able to fill the entire substrate all the same, exact repetitions, i.e. identical repetitions of the original image, are used. Such a method is known from European patent application No. 0 558 008. The result thus obtained clearly exhibits transitions between the individual image elements, which transitions can only be masked by arranging the figurations present on the image elements contiguous to each other. The transitions are not adapted by means of software.

From U.S. Pat. No. 6,593,933 there is known a texture synthesis technique in which the original image is copied over the entire surface area by tiling. Using software techniques, the transitions between the repetitive images are concealed. In this way electrical applications in the field of animations for electronic games, virtual reality and Internet-based environments can be obtained by using a small original image. Such applications are confined to displays and display screens.

To obtain a print comprising a minimum number of objectionable repetitions, it is generally necessary to use a large original image. The scanning of large images is frequently extremely costly and generally impracticable for technical reasons, because scanning is a costly process and because in many cases the original images are simply difficult to obtain. An example of this is a large piece of veneer without any defects in the grain structure.

Another consequence of using the printing cylinder for printing substrates is that a different printing cylinder provided with an associated pattern must be used each time a different image is to be placed on the substrate. In practice this means that a large stock of printing cylinders is needed. Moreover, frequently exchanging a printing cylinder in a printing process is a labour-intensive operation, during which the printing process must be stopped for some time.

It is an object of the present invention to provide a method for printing inks on a substrate, by which method one or more of the above drawbacks are obviated.

Another object of the present invention is to provide a method for printing inks on a substrate, which method proceeds from an original image of random size, whereupon a substrate of random size is printed with an image derived from the original image, with smooth transitions being obtained in the image being printed on the substrate.

The method as described in the first paragraph comprises the steps as recited in claim 1.

One or more of the above objects are accomplished by carrying out the above steps. Step i) is carried out by, for example, scanning, photographing or generation via design software, or a combination thereof. Step i) may also comprise the making of corrections in the digital file, for example via Photoshop (trademark). The digital file thus obtained is processed by means of a computer in step ii), using the original image, or one or more parts thereof, as a basis for generating comparable images, thereby creating a processed digital file. Such an operation comprises, for example, selecting a number of blocks or parts of the original image and subsequently positioning said blocks or parts at random positions, whereupon the boundaries or edges of the thus positioned blocks or parts are processed for the purpose of camouflaging or blurring the visually distinguishable transitions between said blocks or parts and the surface on which said blocks or parts are positioned via software. The selection of blocks or parts takes place via random routines, in which the size, dimension and location of the blocks or parts can be determined at random. The processed digital file is made up of individual images, such that the extent to which the transitions between such individual images are distinguishable is minimized via software applications. The processed digital file according to step ii) is made up of a number of computer-processed compositions of parts of the original image. By placing a print of the thus processed digital file on a surface or substrate by means of a printing unit, the occurrence of edges or sides of the original substrates, which were previously considered to be disadvantageous and undesirable, is minimized or even prevented altogether. The processed digital file is sufficiently large for printing the entire substrate without the processed digital file being composed of a number of objectionably distinguishable repetitions of (parts of) the original image and without any objectionable joints. If the dimension of the processed, digital file is not sufficiently large for covering the substrate, several of such files can be processed anew via the aforesaid route so as to obtain a new file in which the occurrence of objectionable joints or transitions between the respective images is prevented. The term "repetitions" is understood to mean computer-processed compositions of (parts of) the original image.

The inks used in step iv) contain one or more components selected from the group consisting of pigments, colorants, stabilisers, flow agents, viscosity modifiers, anticoagulants, antistatics and fillers, as well as the additives commonly used for inks.

In the above method, the original image is processed in such a manner that in step ii) that the thus processed digital file is a computer-synthetised version of the original image, in which transitions between the aforesaid repetitions or computer-processed compositions in the processed file are smoothly executed, or even do not occur at all. The processed, digital file according to step ii) is preferably built up so that the occurrence of exact parts, repetitions of the original image, is minimized or even altogether absent. Using a processed digital file thus obtained, it is in principle possible to make prints of infinite dimensions, without the resolution of the obtained prints being adversely affected. Moreover, the occurrence of objectionable elements in the print, viz. clearly distinguishable transitions between the parts of which the digitally processed file is made up, is minimized.

A suitable substrate is a cellulose fibre-containing substrate, in particular paper. In a special embodiment, the substrate may also comprises a crosslinkable or curable resin. Examples of crosslinkable resins include thermally curable resins. Especially resins that can be crosslinked by means of UV and EB (Electron Beam) radiation, viz. resin compositions based on (meth)acrylates, have been found to be suitable. The present application in particular relates to the printing of a surface, such as paper, and is not in any way related to animations for electronic games, virtual reality and Internet-based environments.

The method of printing in step iv) is preferably selected from the group of digital printing and inkjet printing. In particular inkjet printing makes it possible to print digital files with a high degree of precision, not using printing cylinders. Moreover, when inkjet printing is used it is possible to use special ink compositions which exhibit advantageous properties in the field of weather resistance.

In a special embodiment of the present method the substrate is supplied on a supply roll, which roll is unwound, with the substrate being supplied to the printing unit at a certain conveying velocity. It is also possible to use loose plate materials as a substrate. Paper can be used as a suitable substrate, for example paper which is used as wallpaper after being subjected to the present method. Particularly suitable are resin-impregnated papers, which papers are used for producing HPL, with the panels thus obtained being used both indoors and outdoors, for example as facade cladding materials. The printing unit places the processed digital file on the substrate in the form of an image, using inks. After drying or crosslinking of the inks has taken place, with the possible use of one or more intermediate stations, such as irradiation with UV and/or EB, forced air drying, for example with hot air, the substrate thus treated is wound onto a roll and is ready for a next process step, for example cutting the printed substrate to the desired dimension.

In a special embodiment it is desirable if the structure-synthetising software module makes use of routines selected from the group of random generation routines, fractal routines, static reaction diffusion, Markov, pyramid-based, hybrid routines and rendering routines for converting the original image of step i) into a digitally processed image, wherein the extent to which exact copying of the original image takes place is minimised. In such an operation, parts of the original image can extended/reduced and/or be rotated through a random angle. Furthermore, the shape, size and location of the blocks (patches) or parts of the original image can be determined by the structure-synthetising software module in addition to the desired resolution.

It is in particular desirable if the structure-synthetising software module comprises mathematical routines in which the essence of the original image is captured in a dataset, which is used as input for the random generation routines.

Texture or structure synthesis is an image-based rendering method for constructing large images from small original images, making use of abstraction of the texture information of the original image. In contrast to tiling techniques with defined image boundaries, texture synthesis algorithms allow the combination of several images for forming seamless and non-repetitive images of any size that may be selected.

The object of a texture synthesis algorithm is to create an output image which complies with one or more of the following criteria.
- The format of the output image can be stated in advance.
- The output image resembles the original image as much as possible.

- The output image does not comprise any objectionable visual defects, such as seams, blocks and objectionable edges.
- The output image is non-repetitive as little as possible. The output image does not comprise any objectionable identical repetitions.
- For industrial application it is important that the algorithms are sufficiently fast and capable of being generated by means of common computers (memory, speed).

It is desirable to use one or more of the following types of structure synthesis for carrying out the present method:
Stochastic texture synthesis
Single purpose structured texture synthesis
Chaos mosaic
Pixel-based texture synthesis
Patch-based texture synthesis
Chemistry-based texture synthesis.

The present invention further relates to the use of a substrate provided with a print, which print has been obtained after digital processing of an original image and which comprises a number of repetitions of the original image, the dimension of said print being larger than the dimension of the original image, wherein the extent to which the transitions between the images in the print are distinguishable has been reduced to a minimum. In a special embodiment, the substrate is a plate or a sheet, wherein in particular the texture-synthesized image is larger than the sheet or a panel that is cut from the eventual product.

The present substrate can be used as decorative paper, which decorative paper is used for producing HPL. The decorative paper is placed on a stack of resin-impregnated paper layers, for example, and compressed at an elevated pressure and temperature to form a panel.

The present invention will now be elucidated by means of an example, which example serves to explain the present invention but which should not be regarded as limitative.

### Comparative example

A printing cylinder having a circumference of 1.2 m is used for printing an endless paper substrate. The thus covered substrate is processed into plates used for cladding building facades having a surface area of 100 m². The facade panels are made in a width of 2 m. The facade structured comprises at least 416 images having the same characteristic structure. Such a facade exhibits an unnatural regularity and an architecturally undesirable picture, in which the transitions between the individual panels can be regarded as objectionable.

### Example according to the invention

The starting point is a scan of a flat piece of wood having a dimension of 30 x 30 cm. Said piece of wood was scanned and processed with Photoshop for adjusting the colour and contrast as required. Furthermore, a few objectionable defects in the image were retouched. Subsequently, the digital image was input into a texture synthesis algorithm. Said algorithm was instructed to create a processed image having a resolution of 30 dpi and a dimension of 1860 x 3005 mm on the basis of the original image.

This processed image is then input into the RIP software of the inkjet printer and subsequently printed on a roll of paper. On said roll of paper, a space of 5 mm is left open between the individual images, where cuts are made in a next process. In this way sheets of 1860 x 1500 mm can be cut, which can be affixed to a plate of 1860 x 1500 mm. Although the method in this example leads to plate materials all carrying the same print, the image is repeated only 18 times for each facade having a surface area of 100 m². If the original scan is passed through the texture synthetising routine for each individual plate, the occurrence of repetitions in a facade can even be prevented altogether.

## Claims

1. A method for printing inks on a substrate, wherein the method comprises the following steps:
i) creating a digital file of an original image,
ii) processing said digital file to obtain a processed digital file,
iii) presenting the processed digital file to a printing unit,
iv) printing the substrate by means of said printing unit, wherein the processed digital file is printed on the substrate by the printing unit as a processed image of the original image, using inks, wherein the original dimension of the original image used in step i) is smaller than the dimension of the processed image being printed on the substrate by the printing unit, wherein said processing comprises
selecting a number of parts of the original image and positioning said parts at random positions, processing the thus positioned parts via structure-synthesizing software, wherein said selection of parts takes place via random routines, in which size, dimension and location of parts are determined at random, wherein the processed digital file is a computer-synthesized version of the original image, in which all transitions between compositions in the processed file are smoothly executed, said compositions of the original image comprise a number of blocks or parts of the original image, which compositions are obtained by computer processing.

2. A method according to claim 1, **characterized in that** step i) comprises the recording (scanning) of the original image and the possible correction of the image thus recorded (scanned).

3. A method according to any one or more of the claims 1-2, **characterized in that** in step ii) the occurrence of exact repetitions of the original image in the processed digital file is minimized.

4. A method according to any one or more of the claims 1-3, **characterized in that** said substrate comprises a crosslinkable resin, wherein preferably said crosslinkable resin is a resin which can be crosslinked by means of UV, EB (electron beam) radiation or by thermal means, and wherein preferably said substrate comprises cellulose fibres, in particular said substrate is a plate material.

5. A method according to one or more of the preceding claims, **characterized in that** the method of printing in step iv) is selected from the group of digital printing and inkjet printing.

6. A method according to one or more of the preceding claims, **characterized in that** in step iv) the substrate is supplied to the printing unit as an endless substrate from a supply roll, wherein preferably the substrate is rolled up after being printed in step iv), especially that the printed substrate is cut into individual units.

7. A method according to one or more of the preceding claims, **characterized in that** the structure-synthesizing software module makes use of routines selected from the group of random generation routines, fractal routines and rendering routines for converting the original image of step i) into a digitally processed image, wherein the extent to which exact copying of the original image takes place is minimized.

8. A method according to one or more of the preceding claims, **characterized in that** the structure-synthesizing software module comprises mathematical routines in which the essence of the original image is captured in a dataset, which is used as input for the random generation routines.

9. A method according to one or more of the preceding claims, **characterized in that** said structure-synthesizing software as applied in step ii) is an image-based rendering method for constructing large images from small original images, making use of abstraction of the texture information of the original image, in which the texture synthesis algorithms allow the combination of several images for forming seamless and non-repetitive images of any selected size.

10. The use of a substrate obtained by means of a method according to any one of claims 1-9 for manufacturing a High Pressure Laminate (HPL) panel.

11. The use according to claim 10, **characterized in that** said HPL panels are used as facade cladding materials.

## Patentansprüche

1. Verfahren zum Drucken von Tinten auf ein Substrat, wobei das Verfahren die folgenden Schritte umfasst:
i) eine digitale Datei eines Originalbildes wird erstellt,
ii) die digitale Datei wird bearbeitet, um eine bearbeitete digitale Datei zu erhalten,
iii) die bearbeitete digitale Datei wird einer Druckeinheit zugeführt,
iv) das Substrat wird mittels der Druckeinheit bedruckt, wobei die bearbeitete digitale Datei von der Druckeinheit als bearbeitetes Bild des Originalbildes unter Verwendung von Tinten auf das Substrat gedruckt wird, wobei das Originalmaß des in Schritt i) verwendeten Originalbildes kleiner als das Maß des bearbeiteten Bildes ist, das von der Druckeinheit auf das Substrat gedruckt wird, wobei bei dem Bearbeiten
eine Anzahl Teile des Originalbildes ausgewählt wird und die Teile an zufälligen Positionen angeordnet werden, die so angeordneten Teile über Struktursynthese-Software aufbereitet werden, wobei die Auswahl von Teilen über Zufallsroutinen erfolgt, bei denen Größe, Maß und Lage von Teilen zufällig bestimmt werden, wobei die bearbeitete digitale Datei eine computersynthetisierte Fassung des Originalbildes ist, bei der alle Übergänge zwischen Kompositionen in der bearbeiteten Datei nahtlos ausgeführt werden, wobei die Kompositionen des Originalbildes eine Anzahl Blöcke oder Teile des Originalbildes umfassen, wobei die Kompositionen durch Computerverarbeitung erhalten werden.

2. Verfahren nach Anspruch 1, **dadurch gekennzeichnet, dass** Schritt i) das Aufzeichnen (Abtasten) des Originalbildes und die mögliche Korrektur des so aufgezeichneten (abgetasteten) Bildes umfasst.

3. Verfahren nach einem oder mehreren der Ansprüche 1 bis 2, **dadurch gekennzeichnet, dass** in Schritt ii) das Auftreten genauer Wiederholungen des Originalbildes in der bearbeiteten digitalen Datei minimiert wird.

4. Verfahren nach einem oder mehreren der Ansprüche 1 bis 3, **dadurch gekennzeichnet, dass** das Substrat ein vernetzbares Harz umfasst, wobei das vernetzbare Harz vorzugsweise ein Harz ist, das mittels UV-, ES-(Elektronenstrahl)-Strahlung oder durch thermische Mittel vernetzt werden kann, und wobei das Substrat vorzugsweise Cellulosefasern umfasst, insbesondere das Substrat ein Plattenmaterial ist.

5. Verfahren nach einem oder mehreren der vorhergehenden Ansprüche, **dadurch gekennzeichnet, dass** das Verfahren zum Drucken in Schritt iv) aus der Gruppe des Digitaldrucks und des Tintenstrahldrucks ausgewählt ist.

6. Verfahren nach einem oder mehreren der vorhergehenden Ansprüche, **dadurch gekennzeichnet, dass** in Schritt iv) das Substrat als Endlossubstrat von einer Vorratsrolle der Druckeinheit zugeführt wird, wobei das Substrat vorzugsweise aufgerollt wird, nachdem es in Schritt iv) bedruckt wird, insbesondere dass das bedruckte Substrat in einzelne Einheiten geschnitten wird.

7. Verfahren nach einem oder mehreren der vorhergehenden Ansprüche, **dadurch gekennzeichnet, dass** das Struktursynthese-Softwaremodul aus der Gruppe der Zufallsgenerierungsroutinen, Fraktal-Routinen und Rendering-Routinen ausgewählte Routinen anwendet, um das Originalbild von Schritt i) in ein digital bearbeitetes Bild umzuwandeln, wobei der Umfang, in dem genaues Kopieren des Originalbildes erfolgt, minimiert wird.

8. Verfahren nach einem oder mehreren der vorhergehenden Ansprüche, **dadurch gekennzeichnet, dass** das Struktursynthese-Softwaremodul mathematische Routinen umfasst, bei denen das Wesentliche des Originalbildes in einem Datensatz erfasst wird, der als Eingabe für die Zufallsgenerierungsroutinen verwendet wird.

9. Verfahren nach einem oder mehreren der vorhergehenden Ansprüche, **dadurch gekennzeichnet, dass** die Struktursynthese-Software, wie sie in Schritt ii) angewendet wird, ein bildbasiertes Rendering-Verfahren zur Gestaltung großer Bilder aus kleinen Originalbildern ist, bei dem von einer Abstraktion der Texturinformation des Originalbildes Gebrauch gemacht wird, bei der die Textursynthesealgorithmen die Kombination mehrerer Bilder zur Bildung nahtloser und sich nicht wiederholender Bilder jeder beliebigen ausgewählten Größe ermöglichen.

10. Verwendung eines mittels eines Verfahrens nach einem der Ansprüche 1 bis 9 erhaltenen Substrats zur Herstellung einer Hochdrucklaminat-(HPL)-Platte.

11. Verwendung nach Anspruch 10, **dadurch gekennzeichnet, dass** die HPL-Platten als Fassadenverkleidungsmaterialien verwendet werden.

## Revendications

1. Procédé pour imprimer des encres sur un substrat, dans lequel le procédé comprend les étapes suivantes :
i) la création d'un fichier numérique d'une image initiale,
ii) le traitement dudit fichier numérique pour obtenir un fichier numérique traité,
iii) la présentation du fichier numérique traité à une unité d'impression,
iv) l'impression du substrat au moyen de ladite unité d'impression, dans lequel le fichier numérique traité est imprimé sur le substrat par l'unité d'impression en tant qu'une image traitée de l'image initiale, en utilisant des encres, dans lequel la dimension initiale de l'image initiale utilisée à l'étape i) est inférieure à la dimension de l'image traitée qui est imprimée sur le substrat par l'unité d'impression, dans lequel ledit traitement comprend
la sélection d'un nombre de parties de l'image initiale et le positionnement desdites parties à des positions aléatoires, le traitement des parties ainsi positionnées par l'intermédiaire d'un logiciel de synthétisation de structure, dans lequel ladite sélection de parties est effectuée par l'intermédiaire de routines aléatoires dans lesquelles la taille, la dimension et l'emplacement des parties sont déterminés de manière aléatoire, dans lequel le fichier numérique traité est une version synthétisée par ordinateur de l'image initiale dans laquelle toutes les transitions entre des compositions dans le fichier traité sont exécutées de manière régulière, lesdites compositions de l'image initiale comprennent un nombre de blocs ou de parties de l'image initiale et lesdites compositions sont obtenues par traitement informatique.

2. Procédé selon la revendication 1, **caractérisé en ce que** l'étape i) comprend l'enregistrement (le scannage) de l'image initiale et la correction possible de l'image ainsi enregistrée (scannée).

3. Procédé selon l'une quelconque des revendications 1 et 2, **caractérisé en ce que**, à l'étape ii), la survenance de répétitions exactes de l'image initiale dans le fichier numérique traité est minimisée.

4. Procédé selon l'une quelconque des revendications 1 et 3, **caractérisé en ce que** ledit substrat comprend une résine pouvant être réticulée, dans lequel de préférence ladite résine pouvant être réticulée est une résine qui peut être réticulée au moyen d'un rayonnement de faisceau d'électrons (EB) ultraviolets (UV) ou par un moyen thermique, et dans lequel de préférence ledit substrat comprend des fibres de cellulose, en particulier ledit substrat étant un matériau de plaque.

5. Procédé selon l'une quelconque des revendications précédentes, **caractérisé en ce que** le procédé d'impression à l'étape iv) est sélectionné dans le groupe se composant d'une impression numérique et d'une impression à jet d'encre.

6. Procédé selon l'une quelconque des revendications précédentes, **caractérisé en ce que**, à l'étape iv), le substrat est fourni à l'unité d'impression sous la forme d'un substrat sans fin à partir d'un rouleau d'alimentation, dans lequel de préférence le substrat est enroulé après avoir été imprimé à l'étape iv), particulièrement **en ce que** le substrat imprimé est découpé en unités individuelles.

7. Procédé selon l'une quelconque des revendications précédentes, **caractérisé en ce que** le module logiciel de synthétisation de structure utilise des routines sélectionnées dans le groupe se composant de routines de génération aléatoire, de routines fractales et de routines de rendu pour la conversion de l'image initiale de l'étape i) en une image traitée numériquement, dans lequel la mesure dans laquelle une copie exacte de l'image initiale intervient est minimisée.

8. Procédé selon l'une quelconque des revendications précédentes, **caractérisé en ce que** le module logiciel de synthétisation de structure comprend des routines mathématiques dans lesquelles l'essence de l'image initiale est acquise dans un jeu de données qui est utilisé en tant qu'entrée pour les routines de génération aléatoire.

9. Procédé selon l'une quelconque des revendications précédentes, **caractérisé en ce que** ledit logiciel de synthétisation de structure tel qu'il est appliqué à l'étape ii) est un procédé de rendu basé sur image pour construire de grandes images à partir de petites images initiales en utilisant une abstraction des informations de structure de l'image initiale, dans lequel les algorithmes de synthèse de structure permettent la combinaison de plusieurs images pour former des images régulières et non répétitives de n'importe quelle taille sélectionnée.

10. Utilisation d'un substrat obtenu au moyen d'un procédé selon l'une quelconque des revendications 1 à 9 pour fabriquer un panneau stratifié haute pression (HPL).

11. Utilisation selon la revendication 10, **caractérisée en ce que** lesdits panneaux HPL sont utilisés en tant que matériaux de revêtement de façade.
